# EUROPEAN PATENT APPLICATION

(11) **EP 4 725 872 A1**
(43) Date of publication of application: **15.04.2026**
(21) Application number: 25186278.5
(22) Date of filing: 30.06.2025
(51) Int. Cl.: B65G 15/30, B65G 23/24, B65G 23/44, B65G 43/04, B65G 43/08, B65G 23/06

(54) **CONVEYING DEVICE AND DETECTION SYSTEM**

(30) Priority: 12.10.2024 CN 202411426467
(71) Applicant: NUCTECH COMPANY LIMITED, Beijing 100084 (CN); Tsinghua University, Haidian District, Beijing 100084 (CN)
(72) Inventor: ZHANG, Li, Beijing, 100084 (CN); LI, Liang, Beijing, 100084 (CN); HONG, Mingzhi, Beijing, 100084 (CN); WANG, Zinan, Beijing, 100084 (CN); REN, Yong, Beijing, 100084 (CN); CHANG, Ming, Beijing, 100084 (CN)
(74) Representative: Isarpatent

(57) **Abstract**

A conveying device is provided, including: a conveying mechanism (1), which includes a mounting frame (11), a driving roller (12), a driven roller (13) and a conveyor belt (14), in which the driving roller (12) and the driven roller (13) are rotatably mounted on the mounting frame, and the conveyor belt (14) is fitted over the driving roller (12) and the driven roller (13), and configured to convey a to-be-detected object (7); a driving mechanism (2) connected with the driving roller (12) and configured to drive the driving roller (12) to rotate; a sensor unit configured to sense a first position information and a second position information of the to-be-detected object (7) on the conveyor belt (14); and a control unit (9) communicatively connected with both the sensor unit and the driving mechanism (2), and configured to control the driving mechanism (2) to be in a first state or a second state based on the first position information or the second position information. The driving mechanism (2), when in the first state, the conveyor belt (14) conveys the to-be-detected object (7); and when in the second state, the conveyor belt (14) is in a stationary state.

## Description

### TECHNICAL FIELD

The present disclosure relates to a technical field of conveying devices and detection technology, in particular to a conveying device and a detection system.

### BACKGROUND

Detection systems employ radiation beams to illuminate a workpiece and determine the presence of defects of the workpiece based on scanned images, and they are widely applied in the quality inspection field.

In the prior art, a detection system generally includes a conveying device and a detection device. The conveying device is used to convey a to-be-detected object to a detection station, and the detection device detects the to-be-detected object at the detection station. During the conveying of the to-be-detected object by a conveyor belt, it is unable to accurately control the position of the to-be-detected object. Therefore, when the to-be-detected object is moved to the detection station, it may arrive either forward of or behind the detection region of the detection device and thus deviates from the detection region, which will affect the detection accuracy.

### SUMMARY

In a first aspect, the embodiments of the present disclosure provide a conveying device. The conveying device includes: a conveying mechanism, which includes a mounting frame, a driving roller, a driven roller and a conveyor belt, where the driving roller and the driven roller are rotatably mounted on the mounting frame, and the conveyor belt is fitted over the driving roller and the driven roller and is configured to convey a to-be-detected object; a driving mechanism connected with the driving roller and configured to drive the driving roller to rotate; a sensor unit configured to sense a first position information and a second position information of the to-be-detected object on the conveyor belt; and a control unit communicatively connected with both the sensor unit and the driving mechanism, where the control unit is configured to control the driving mechanism to be in a first state or a second state based on the first position information or the second position information. When the driving mechanism is in the first state, the conveyor belt conveys the to-be-detected object; and when the driving mechanism is in the second state, the conveyor belt is in a stationary state.

According to the embodiments of the present disclosure, the first sensor is arranged at a first position in a conveying direction of the conveying mechanism, and is configured to send a first sensing signal to the control unit, and the control unit controls the driving mechanism to be in the first state based on the first sensing signal; and the second sensor is arranged at a second position in the conveying direction of the conveying mechanism, and is configured to send a second sensing signal to the control unit, and the control unit controls the driving mechanism to be in the second state based on the second sensing signal.

According to the embodiments of the present disclosure, the conveying device further include a feedback unit communicatively connected with the control unit, where the feedback unit is configured to detect the second position information of the to-be-detected object on the conveyor belt; and the control unit controls the driving mechanism to be in the second state based on the second position information detected by the feedback unit.

According to the embodiments of the present disclosure, the feedback unit includes a first encoder arranged on the driven roller, and the first encoder is configured to measure a first real-time angle of rotation of the driven roller and acquire the second position information based on the first real-time angle.

According to the embodiments of the present disclosure, the feedback unit further includes a second encoder arranged on the driving roller, and the second encoder is configured to measure a second real-time angle of rotation of the driving roller.

According to the embodiments of the present disclosure, the control unit is further configured to receive a detection signal, and control the driving mechanism to be in the first state based on the detection signal, so as to convey the to-be-detected object from a detection position to an offloading position.

According to the embodiments of the present disclosure, the driving roller includes a first rotating shaft, a driving wheel and first timing pulleys, where the driving wheel is sleeved on the first rotating shaft, two first timing pulleys are sleeved on the first rotating shaft and arranged on opposite sides of the driving wheel; the driven roller includes a second rotating shaft, a driven wheel and second timing pulleys, where the driven wheel is sleeved on the second rotating shaft, and two second timing pulleys are sleeved on the second rotating shaft and arranged on opposite sides of the driven wheel; and the conveyor belt includes a flat belt and timing belts connected to opposite sides of the flat belt, where the flat belt is fitted over the driving wheel and the driven wheel, and the timing belts are fitted over the first timing pulley and the second timing pulley.

According to the embodiments of the present disclosure, the conveying device further includes a support member arranged on a top of the mounting frame and configured to support the flat belt.

According to the embodiments of the present disclosure, the conveying device further includes a tensioning mechanism arranged at a bottom of the mounting frame, where the tensioning mechanism includes a tensioning roller adapted to be moved in a vertical direction to adjust a tension level of the conveyor belt.

In a second aspect, the embodiments of the present disclosure provide a detection system. The detection system includes the conveying device as described above; and a detection device arranged in a conveying direction of the conveying device. The conveying device is configured to convey a to-be-detected object from a first position to a second position, and the detection device is configured to detect the to-be-detected object.

### BRIEF DESCRIPTION OF THE DRAWINGS

The above and other objectives, features and advantages of the present disclosure will be more apparent from the following descriptions of embodiments of the present disclosure with reference to the accompanying drawings.
FIG. 1 schematically shows an isometric view of a conveying device according to the embodiments of the present disclosure;
FIG. 2 schematically shows a front view of a conveying device according to the embodiments of the present disclosure;
FIG. 3 schematically shows a partial structural diagram of a conveying device according to the embodiments of the present disclosure;
FIG. 4 schematically shows a side view of a conveying device according to the embodiments of the present disclosure;
FIG. 5 is a partially enlarged schematic diagram of section A in FIG. 4;
FIG. 6 schematically shows an assembly diagram of a driving roller, a first mount and a driving mechanism according to the embodiments of the present disclosure;
FIG. 7 schematically shows an assembly diagram of a driven roller and a second mount according to the embodiments of the present disclosure;
FIG. 8 schematically shows a partial structural diagram of a conveyor belt according to the embodiments of the present disclosure; and
FIG. 9 schematically shows a structural diagram of a detection system according to the embodiments of the present disclosure.

### Reference signs:

1: conveying mechanism; 11: mounting frame; 111: leg; 112: support beam; 113: first mount; 114: second mount; 115: third mount; 12: driving roller; 121: driving wheel; 122: first timing pulley; 13: driven roller; 131: driven wheel; 132: second timing pulley; 14: conveyor belt; 141: flat belt; 142: timing belt; 2: driving mechanism; 31: first sensor; 32: second sensor; 41: first encoder; 42: second encoder; 5: support member; 51: horizontal connecting portion; 52: vertical connecting portion; 53: support portion; 6: tensioning mechanism; 61: tensioning roller; 62: idler roller; 7: to-be-detected object; 81: radiation source; 82: detector

### DETAILED DESCRIPTION OF EMBODIMENTS

In order to make the objective, technical solution and advantages of the present disclosure more clear, the present disclosure will be further described in detail below with reference to the specific embodiments and drawings. Obviously, the described embodiments are part of the embodiments of the present disclosure, not all of the embodiments. Based on the embodiments in the present disclosure, all the other embodiments obtained by those of ordinary skills in the art without creative labor belong to the scope of protection of the present disclosure.

The terms used herein are only for describing specific embodiments and are not intended to limit the disclosure. The terms "comprise", "include" and the like used herein indicate the presence of the stated features, steps, operations and/or components, but do not exclude the presence or addition of one or more other features, steps, operations or components.

In the description of the present disclosure, it should be noted that unless otherwise specified and limited, the terms "mount", "connect" and "couple" should be broadly understood, for example, it may be a fixed connection, a detachable connection or an integrated connection; it may be a mechanical connection or an electrical connection; or it may be a direct connection, an indirect connection through an intermediate medium, or an internal communication of two elements. Those skilled in the art may understand the specific meanings of the above terms in the present disclosure according to specific situations.

In the prior art, a detection system generally includes a conveying device and a detection device. The conveying device is used to convey a to-be-detected object to a detection station, and the detection device detects the to-be-detected object at the detection station. The to-be-detected object is moved to the detection station with the conveyor belt. During the conveying of the to-be-detected object by a conveyor belt, the position of the to-be-detected object is usually controlled by setting the rotation time of the conveyor belt, and it is unable to accurately control the position of the to-be-detected object. Therefore, when the to-be-detected object is moved to the detection station, the to-be-detected object may arrive either forward of or behind the detection region of the detection device, and thus deviates from the detection region, which will affect the detection accuracy.

In view of this, embodiments of the present disclosure provide a conveying device and a detection system, so as to solve the problem that the existing conveying devices failed to accurately locate a conveyed object.

The conveying device and the detection system provided in the embodiments of the present disclosure provide may accurately control the position of the to-be-detected object, thereby ensuring the detection accuracy.

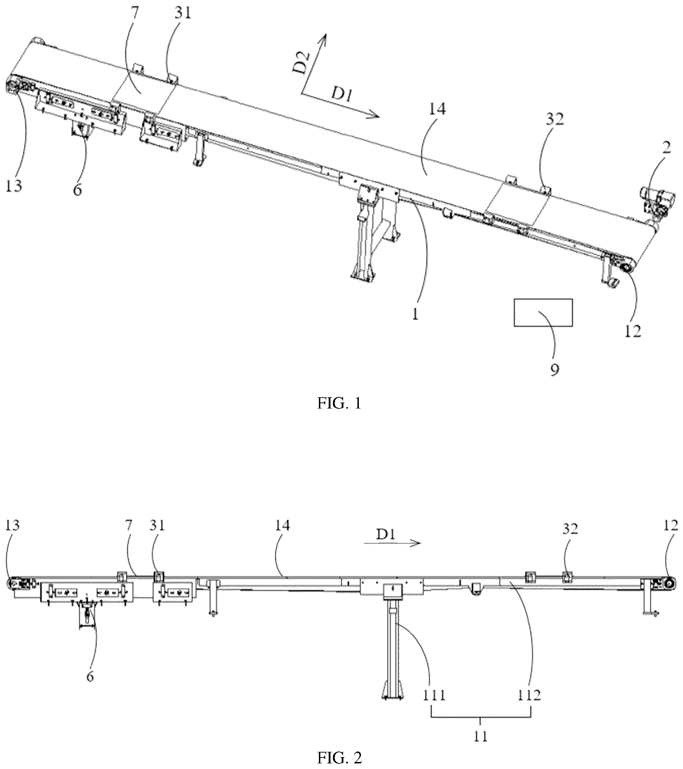

A conveying device according to the embodiments of the present disclosure will be described below with reference to FIG. 1 to FIG. 8.

As shown in FIG. 1, FIG. 2, FIG. 3 and FIG. 4, the conveying device provided in the embodiments of the present disclosure includes a conveying mechanism 1, a driving mechanism 2, a sensor unit and a control unit 9. The conveying mechanism 1 includes a mounting frame 11, a driving roller 12, a driven roller 13 and a conveyor belt 14. The driving roller 12 and the driven roller 13 are rotatably mounted on the mounting frame 11, the conveyor belt 14 is fitted over the driving roller 12 and the driven roller 13, and the conveyor belt 14 is used to convey a to-be-detected object 7. The driving mechanism 2 is connected to the driving roller 12 and is used to drive the driving roller 12 to rotate. The sensor unit is used to sense a first position information and a second position information of the to-be-detected object 7 on the conveyor belt 14. Both the sensor unit and the driving mechanism 2 are communicatively connected with the control unit 9, and the control unit 9 controls the driving mechanism 2 to be in a first state or a second state based on the first position information or the second position information. When the driving mechanism is in the first state, the conveyor belt 14 conveys the to-be-detected object 7, and when the driving mechanism is in the second state, the conveyor belt 14 is in a stationary state.

Specifically, the mounting frame 11 is used to mount the driving roller 12, the driven roller 13 and other components. The mounting frame 11 includes a leg 111 and a support beam 112. One end of the leg 111 is connected to the support beam 112, and the leg 111 is placed on the ground or on a workbench. The support beam 112 may be a frame structure formed of two longitudinal beams and a plurality of transverse beams joined together. The support beam 112 has a length direction as shown as D1 direction in FIG. 1 and FIG. 2, and a width direction as shown as D2 direction in FIG. 1. In the length direction, the support beam 112 has a first end and a second end opposite to the first end, and in the width direction, the support beam 112 has a first side and a second side opposite to the first side.

The driving roller 12 is rotatably mounted on the first end of the support beam 112, the driven roller 13 is rotatably mounted on the second end of the support beam 112, and the conveyor belt 14 is fitted over the driving roller 12 and the driven roller 13.

The driving mechanism 2 is connected to the driving roller 12 and is used to drive the driving roller 12 to rotate. The driving mechanism 2 may be a motor, which may be a single-phase motor, a dual-phase motor or a three-phase motor. A driving shaft of the motor and a rotating shaft of the driving roller 12 are connected with each other via a power coupling.

The sensor unit is arranged in a conveying direction of the conveying mechanism 1. A loading station and a detection station are provided in the conveying direction of the conveying mechanism 1, the loading station corresponds to a loading position, and the detection station corresponds to a detection position. The detection device is arranged at the detection station, and a distance between the loading position and the detection position is defined as a preset distance.

The sensor unit includes sensors. At least one sensor is mounted at the loading station for detecting whether the to-be-detected object 7 is placed on the conveyor belt 14 and located at the loading position. At least one sensor is mounted at the detection station for detecting whether the to-be-detected object 7 is moved to the detection position with the conveyor belt 14. The sensor may be a photoelectric sensor, an infrared sensor, an ultrasonic sensor, a laser radar, etc. The following will take the sensor being a photoelectric sensor as an example.

A photoelectric sensor mounted at the loading station is defined as a first sensor 31. In a case that the size of the to-be-detected object 7 is small, a group of first sensors are mounted at the loading station. This group of first sensors include two first sensors 31, which are symmetrically distributed with respect to a central plane of the support beam 112. The two first sensors 31 are respectively mounted on a first side and a second side of the support beam 112, with one first sensor 31 as a transmitter and the other first sensor 31 as a receiver. In a case that the size of the to-be-detected object 7 is large, two groups of first sensors are mounted at the loading station, the distance between the two groups of first sensors matches the length of the to-be-detected object 7, and the two groups of first sensors are used to detect whether the to-be-detected object 7 is at the loading position. It may be understood that more than two groups of first sensors 31 may be provided at the loading station according to the size of the length and of the to-be-detected object 7.

A photoelectric sensor mounted at the detection station is defined as a second sensor 32. According to the size of the length of the to-be-detected object 7, one, two or more groups of second sensors may be mounted at the detection station. Each group of second sensors include two second sensors 32, which are symmetrically distributed with respect to the central plane of the support beam 112. The two second sensors 32 are respectively mounted on the first side and the second side of the support beam 112, with one second sensor 32 as a transmitter and the other second sensor 32 as a receiver.

Both the driving mechanism 2 and the sensor unit are communicatively connected to the control unit 9.

The to-be-detected object 7 may be placed on the conveyor belt 14 through a transfer device, the to-be-detected object 7 is placed on the conveyor belt 14 and is located at the loading position, thus the to-be-detected object 7 is within a sensing region of the first sensor group. The first sensor 31 sends a first sensing signal to the control unit 9, and the control unit 9 receives the first sensing signal and controls the state of the driving mechanism 2. The to-be-detected object 7 is moved to the detection position with the conveyor belt 14, thus the to-be-detected object 7 is in the sensing region of the second sensor group. The second sensor 32 sends a second sensing signal to the control unit 9, and the control unit 9 receives the second sensing signal and controls the state of the driving mechanism 2.

The working process of the conveying device is described below in detail.

Before the to-be-detected object 7 is placed on the conveyor belt 14, the motor is in a shutdown state, and the conveyor belt 14 is in the stationary state. When the to-be-detected object 7 is placed on the conveyor belt 14, the to-be-detected object 7 is within the sensing region of the first sensor 31. The first sensor 31 sends a first sensing signal to the control unit 9, and the control unit 9 receives the first sensing signal and controls the motor to be turned on. At this time, the motor is in a first state, which is a working state.

After the motor is turned on, the motor drives the driving roller 12 to rotate, which drives the conveyor belt 14 to rotate, and the to-be-detected object 7 is moved from the loading position to the detection position with the conveyor belt 14. After the to-be-detected object 7 arrives at the detection position, the to-be-detected object 7 is in the sensing region of the second sensor 32. The second sensor 32 sends a second sensing signal to the control unit 9, and the control unit 9 receives the second sensing signal and controls the motor to be turned off. At this time, the motor is in a second state, which is a non-working state.

After the motor is turned off, the driving roller 12 stops rotating, and the conveyor belt 14 is in the stationary state. At this time, the to-be-detected object 7 is at the detection position, within the detection region of the detection device, and the detection device detects the to-be-detected object 7.

The loading position of the to-be-detected object 7 is sensed by the first sensor 31, and the detection position of the to-be-detected object 7 is sensed by the second sensor 32. The control unit 9 receives the sensing signal from the sensor unit and controls the driving mechanism 2 to be in the first state or the second state, so that the to-be-detected object 7 may be accurately moved from the loading position to the detection position.

Optionally, after the detection of the to-be-detected object 7 is completed, the control unit 9 receives a detection signal sent by the detection device, which serves as a detection completion signal. Based on the detection completion signal, the control unit 9 controls the motor to be turned on, and the to-be-detected object 7 is moved towards the offloading station with the conveyor belt 14. When the to-be-detected object 7 moves to the offloading station, the motor is turned off, and the to-be-detected object 7 is transferred to the next process.

Optionally, after the detection of the to-be-detected object 7 is completed, the control unit 9 receives the detection completion signal sent by the detection device, and the detected object 7 whose detection is completed may be directly taken away from the detection position.

In the embodiments of the disclosure, the sensor unit is used to sense the position information of the to-be-detected object 7 on the conveyor belt 14, and the control unit 9 controls the driving mechanism 2 to be in the first state or the second state based on the sensing signal from the sensor unit, so as to accurately move the to-be-detected object 7 from the loading position to the detection position and ensure the position accuracy of the to-be-detected object 7 at the detection position.

In an optional embodiment, the conveying device further includes a feedback unit communicatively connected with the control unit 9. The feedback unit is configured to detect the second position information of the to-be-detected object 7 on the conveyor belt 14. The control unit 9 controls the driving mechanism 2 to be in the second state based on the second position information detected by the feedback unit.

Specifically, in a case that the detection device includes a detection channel, the to-be-detected object 7 is required to be detected within the detection channel. In a case that it is inconvenient to mount a sensor in the detection position, the feedback unit may be used to detect the second position information of the to-be-detected object 7 on the conveyor belt 14. Alternatively, in a case that the radiation source of the detection device emits radiation beams to detect the to-be-detected object 7, if the sensor is a photoelectric sensor, the light beam emitted by the photoelectric sensor may interfere the detection. In this case, the feedback unit may be used to detect the second position information of the to-be-detected object 7 on the conveyor belt 14.

The feedback unit includes an encoder mounted on the driving roller 12 or the driven roller 13. The encoder is used to measure a rotation angle of the driving roller 12 or a rotation angle of the driven roller 13, and calculate a travel distance of the conveyor belt 14 based on the rotation angle of the driving roller 12 or the rotation angle of the driven roller 13, thereby accurately controlling the position of the to-be-detected object 7 based on the travel distance of the conveyor belt 14.

For example, the encoder is mounted on the driven roller 13, and the distance between the loading position and the detection position is the preset distance. In a case that the rotational angular velocity and the radius of the driven roller 13 are known, a first target angle that the driven roller 13 needs to rotate to drive the conveyor belt 14 to move from the loading position to the detection position is calculated based on the preset distance.

After the motor is turned on, the encoder starts to measure the rotation angle of the driven roller 13. If a first real-time angle measured by the encoder is equal to the first target angle, it indicates that the to-be-detected object 7 is moved from the loading position to the detection position with the conveyor belt 14 at this time. The control unit 9 receives a first angle signal from the encoder and determines that the to-be-detected object 7 reaches the detection position. Then, the control unit 9 controls the motor to be turned off and the detection device starts to detect the to-be-detected object 7.

For example, the encoder is mounted on the driving roller 12, and the distance between the loading position and the detection position is the preset distance. In a case that the rotational angular velocity and the radius of the driving roller 12 are known, a second target angle that the driving roller 12 needs to rotate to drive the conveyor belt 14 to move from the loading position to the detection position is calculated based on the preset distance.

After the motor is turned on, the encoder starts to measure the rotation angle of the driving roller 12. If a second real-time angle measured by the encoder is equal to a second target angle, it indicates that the to-be-detected object 7 is moved from the loading position to the detection position with the conveyor belt 14 at this time. The control unit 9 receives a second angle signal from the encoder and determines that the to-be-detected object 7 reaches the detection position. The control unit 9 controls the motor to be turned off and the detection device starts to detect the to-be-detected object 7.

After the motor is turned on, the travel distance of the conveyor belt 14 is detected based on the rotation angle of the driven roller 13 or the rotation angle of the driving roller 12 measured by the encoder, so that the travel distance of the conveyor belt 14 may be accurately controlled, thus the position of the to-be-detected object 7 may be accurately fed back.

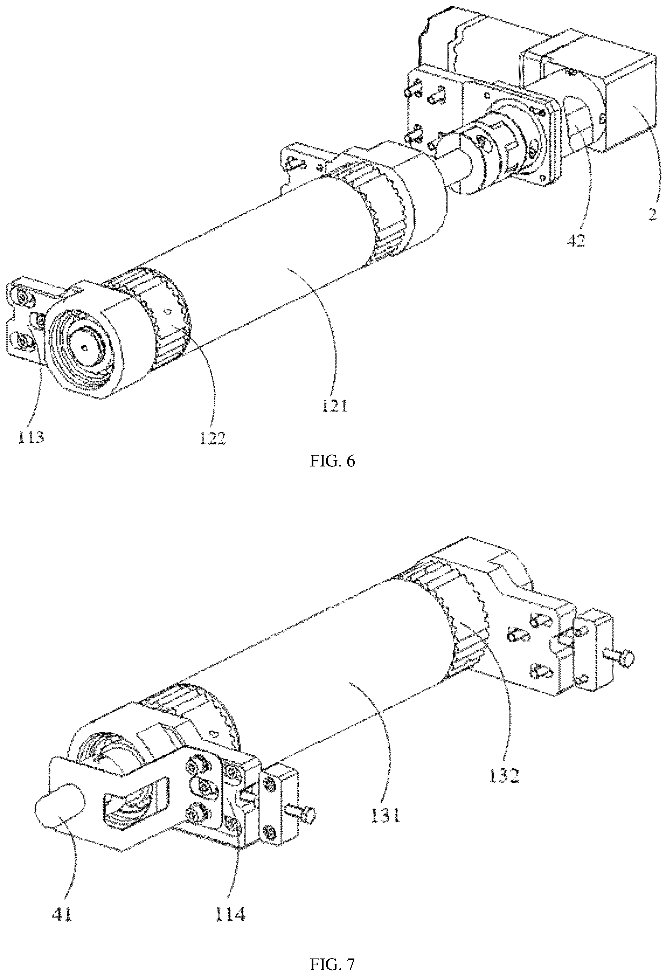

As shown in FIG. 7, in an optional embodiment, the feedback unit includes a first encoder 41 provided on the driven roller 13 and used to detect a first real-time angle of rotation of the driven roller 13 and acquire the second position information based on the first real-time angle.

Specifically, the feedback unit includes the first encoder 41 mounted on the driven roller 13 and used to detect the first real-time angle of rotation of the driven roller 13 in real time.

Based on the preset distance, the angular velocity of the driven roller 13 and the radius of the driven roller 13, the first target angle that the driven roller 13 needs to rotate to drive the conveyor belt 14 to move from the loading position to the detection position is calculated.

The first sensor 31 detects that the to-be-detected object 7 is at the loading position, and transmits a first sensing signal to the control unit 9, and the control unit 9 receives the first sensing signal and controls the motor to be turned on. After the motor is turned on, the first encoder 41 detects the rotation angle of the driven roller 13 in real time. If the first real-time angle measured by the first encoder 41 is equal to the first target angle, it indicates that the to-be-detected object 7 is moved to the detection position with the conveyor belt 14 at this time. The first encoder 41 transmits a first angle signal to the control unit 9, and the control unit 9 receives the first angle signal and controls the motor to be turned off. After that, the detection device starts to detect the to-be-detected object 7.

The rotation angle of the driven roller 13 may more accurately reflect the travel distance of the conveyor belt 14, thereby facilitating a more accurate reflection of the position of the to-be-detected object 7.

As shown in FIG. 6, in an optional embodiment, the feedback unit further includes a second encoder 42 arranged on the driving roller 12 and used to measure a second real-time angle of rotation of the driving roller 12.

Specifically, the feedback unit further includes a second encoder 42. The second encoder is mounted on the driving roller 12, or may be mounted on the motor. The second encoder 42 is used to detect the second real-time angle of rotation of the driving roller 12 in real time.

Based on the preset distance, the angular velocity of the driving roller 12 and the radius of the driving roller 12, the second target angle that the driving roller 12 needs to rotate to drive the conveyor belt 14 to move from the loading position to the detection position is calculated.

The second real-time angle of rotation of the driving roller 12 may be measured to determine whether the to-be-detected object 7 is moved to the detection position. When the to-be-detected object 7 is at the loading position, after the control unit 9 controls the motor to be turned on, the second encoder 42 measures the rotation angle of the driving roller 12 in real time. If the second real-time angle measured by the second encoder 42 is equal to the second target angle, it indicates that the to-be-detected object 7 is moved to the detection position with the conveyor belt 14 at this time. The second encoder 42 sends a second angle signal to the control unit 9, and the control unit 9 receives the second angle signal and controls the motor to be turned off. After that, the detection device starts to detect the to-be-detected object 7.

Additionally, by comparing the first real-time angle and the second real-time angle, it is possible to determine whether the rotation of the driven roller 13 and the rotation of the driving roller 12 are synchronized.

Optionally, the diameter of the driven roller 13 is equal to the diameter of the driving roller 12, and the second target angle is equal to the first target angle.

If the first real-time angle measured by the first encoder 41 is equal to the second real-time angle measured by the second encoder 42 within a preset duration, it indicates that the driven roller 13 and the driving roller 12 rotate synchronously. The preset duration is set according to actual needs, which may be 2 seconds, 4 seconds, 6 seconds, etc.

If the first real-time angle measured by the first encoder 41 is smaller than the second real-time angle measured by the second encoder 42 within the preset duration, it indicates that the driven roller 13 and the driving roller 12 are out of synchronization. In this case, it is necessary to turn off the motor and inspect and repair the conveyor belt 14, the driving roller 12 and the driven roller 13, etc.

Optionally, the diameter of the driven roller 13 is smaller than the diameter of the driving roller 12, and the second target angle is smaller than the first target angle. A ratio of the first real-time angle to the second real-time angle should be equal to a ratio of the diameter of the driving roller 12 to the diameter of the driven roller 13.

If the ratio of the first real-time angle to the second real-time angle is equal to the ratio of the diameter of the driving roller 12 to the diameter of the driven roller 13 within a preset duration, it indicates that the driven roller 13 and the driving roller 12 rotate synchronously.

If the ratio of the first real-time angle to the second real-time angle is smaller than the ratio of the diameter of the driving roller 12 to the diameter of the driven roller 13 within the preset duration, it indicates that the rotation of the driven roller 13 and the rotation of the driving roller 12 are out of synchronization. At this time, it is necessary to turn off the motor and inspect and repair the conveyor belt 14, the driving roller 12 and the driven roller 13, etc.

In this way, the position of the object 7 may be accurately detected based on the first real-time angle measured by the first encoder 41 and the second real-time angle measured by the second encoder 42. Additionally, by comparing the first real-time angle and the second real-time angle, it may be reflected whether the rotation of the driven roller 13 and the rotation of the driving roller 12 are synchronized, so as to ensure that the first real-time angle may accurately reflect the position of the to-be-detected object 7.

As shown in FIG. 6, FIG. 7 and FIG. 8, in an optional embodiment, the driving roller 12 includes a first rotating shaft, a driving wheel 121 and first timing pulleys 122. The driving wheel 121 is sleeved on the first rotating shaft. Two first timing pulleys 122 are fitted over the first rotating shaft, and arranged on opposite sides of the driving wheel 121. The driven roller 13 includes a second rotating shaft, a driven wheel 131 and second timing pulleys 132. The driven wheel 131 is sleeved on the second rotating shaft. Two second timing pulleys 132 are fitted over the second rotating shaft, and arranged on opposite sides of the driven wheel 131. The conveyor belt 14 includes a flat belt 141 and timing belts 142 connected to opposite sides of the flat belt 141. The flat belt 141 is fitted over the driving wheel 121 and the driven wheel 131, and the timing belts 142 are fitted over the first timing pulleys 122 and the second timing pulleys 132.

Specifically, the driving roller 12 includes a first rotating shaft, a driving wheel 121 and first timing pulleys 122. The driving wheel 121 is sleeved on the first rotating shaft. Two first timing pulleys 122 are sleeved on the first rotating shaft, and arranged on opposite sides of the driving wheel 121. The driving wheel 121 is a smooth wheel. The diameter of the driving wheel 121 is equal to the diameter of the first timing pulley 122.

The mounting frame 11 further includes two first mounts 113, and opposite ends of the first rotating shaft are rotatably connected to the two first mounts 113 respectively. The two first mounts 113 may be mounted on the first end of the support beam 112 by screwing, and the two first mounts 113 are respectively located on the first side and the second side of the support beam 112. The first rotating shaft is rotatably connected to the two first mounts 113, so that the driving roller 12 are rotatably mounted on the first end of the support beam 112.

The driven roller 13 includes a second rotating shaft, a driven wheel 131 and second timing pulleys 132. The driven wheel 131 is sleeved on the second rotating shaft. Two second timing pulleys 132 are sleeved on the second rotating shaft and located on opposite sides of the driven wheel 131. The driven wheel 131 is a smooth wheel. The diameter of the driven wheel 131 is equal to the diameter of the second timing pulley 132.

The mounting frame 11 further includes two second mounts 114, and opposite ends of the second rotating shaft are rotatably connected to the two second mounts 114 respectively. The two second mounts 114 may be mounted on the second end of the support beam 112 by screwing, and the two second mounts 114 are respectively located on the first side and the second side of the support beam 112. The second rotating shaft is rotatably connected to the two second mounts 114, so that the driven roller 13 are rotatably mounted on the second end of the support beam 112.

The conveyor belt 14 is formed by splicing a flat belt 141 and two timing belts 142, i.e., the flat belt 141 has two opposite sides, one side of the flat belt 141 is connected to one timing belt 142, and the other side of the flat belt 141 is connected to the other timing belt 142. The width of the flat belt 141 matches the lengths of the driving wheel 121 and the driven wheel 131, and the width of the timing belt 142 matches the lengths of the first timing pulley 122 and the second timing pulley 132.

The flat belt 141 is sleeved on the driving wheel 121 and the driven wheel 131, and the timing belts 142 are fitted over the first timing pulley 122 and the second timing pulley 132. It will be understood that the width of the flat belt 141 is larger than the width of the timing belt 142, and the flat belt 141 is used to carry the to-be-detected object 7.

In a case that the conveyor belt 14 is entirely a flat belt, during the rotation of the conveyor belt 14, slippage is prone to occur, which may cause the movement of the conveyor belt 14 out of synchronization with the movement of the driving mechanism 2, thereby affecting the accurate detection of the position of the to-be-detected object 7.

The flat belt 141 and the timing belt 142 are used in combination, and the timing belts 142 are engaged with the first timing pulley 122 and the second timing pulley 132. The use of two timing belts 142 may avoid the slippage of the conveyor belt 14 during the rotation of the conveyor belt 14, which may ensure the movement synchronization of the conveyor belt 14 with the driving roller 12 and the driven roller 13, thereby facilitating the accurate detection of the position of the to-be-detected object 7.

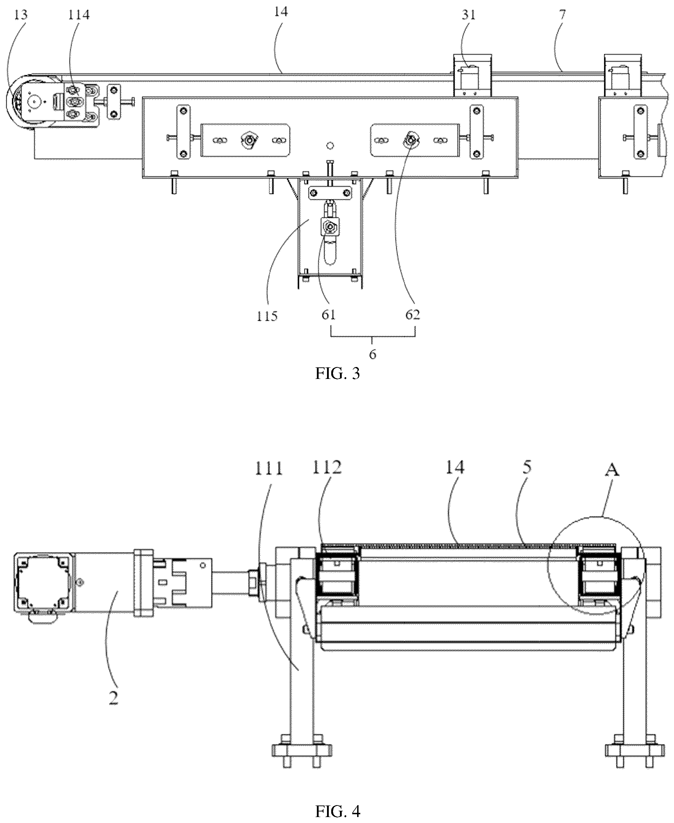

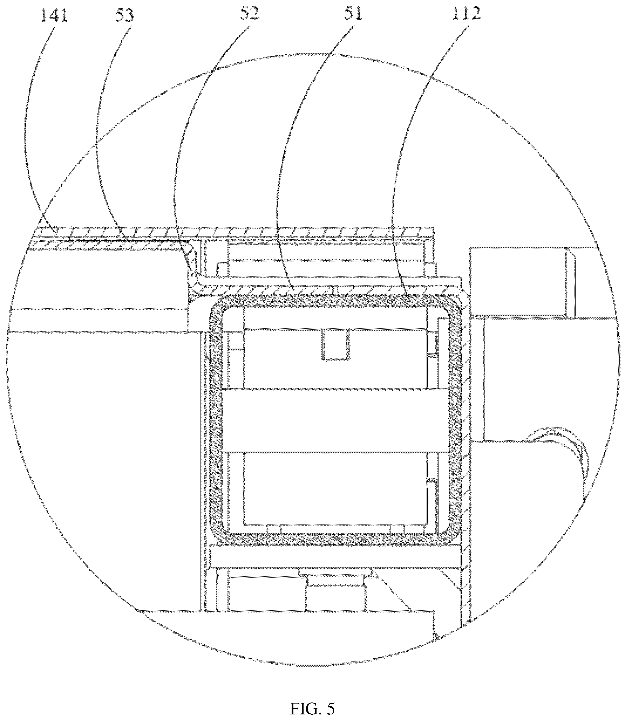

As shown in FIG. 4 and FIG. 5, in an optional embodiment, the conveying device further includes a support member 5 arranged at the top of the mounting frame 11, and the support member 5 is used to support the flat belt 141.

Specifically, the conveying device further includes a support member 5 for supporting the conveyor belt 14. The support member 5 includes a connecting portion and a support portion 53, and the connecting portion may be connected to the longitudinal beam of the support beam 112 by welding, screwing or snap-fit. The support member 5 may be formed by bending a sheet material.

Optionally, the support member 5 is U-shaped. The connecting portion includes a vertical connecting portion, and the support portion 53 is formed by bending an end of the vertical connecting portion by 90 degrees and extending the end horizontally. The vertical connecting portion may be connected to an inner side surface of the longitudinal beam of the support beam 112.

Optionally, the support member 5 is in a shape of a Chinese character " 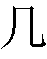 ". The connecting portion includes a horizontal connecting portion 51 and a vertical connecting portion 52. The vertical connecting portion 52 is formed by bending the horizontal connecting portion 51 by 90 degrees towards the vertical direction and extending it vertically, and the support portion 53 is formed by bending the vertical connecting portion 52 by 90 degrees towards the horizontal direction and extends it horizontally. The vertical connecting portion 52 serves as a transition from the horizontal connecting portion 51 to the support portion 53, and the horizontal connecting portion 51 may be connected to the top surface of the longitudinal beam of the support beam 112.

The width of the support portion 53 matches the width of the flat belt 141, and the support portion 53 contacts the inner surface of the flat belt 141 or the two are arranged proximity to each other. The to-be-detected object 7 is placed on the conveyor belt 14, contacting the outer surface of the flat belt 141. The support portion 53 may effectively support the flat belt 141, so that it is possible to effectively prevent local sagging of the flat belt 141 due to the gravity of the to-be-detected object 7. In this way, the planarity of the conveying surface of the conveyor belt 14 may be maintained, thereby ensuring stable conveying of the to-be-detected object 7 by the conveyor belt 14.

As shown in FIG. 1, FIG. 2 and FIG. 3, in an optional embodiment, the conveying device further includes a tensioning mechanism 6 arranged at the bottom of the mounting frame 11. The tensioning mechanism 6 includes a tensioning roller 61 adapted to move vertically to adjust the tightness of the conveyor belt 14.

Specifically, the tensioning mechanism 6 includes the tensioning roller 61, and the mounting frame 11 further includes third mounts 115. Two third mounts 115 are provided, which are respectively arranged on the first side and the second side of the support beam 112. The tensioning roller 61 includes a first mandrel and a first rotating cylinder rotatably connected to the first mandrel. Both ends of the first mandrel are respectively connected to the two third mounts 115. The inner surface of the conveyor belt 14 is in rolling contact with the first rotating cylinder.

The first mandrel is movably mounted on the third mounts 115 in the vertical direction. The height of the tensioning roller 61 is adjusted by moving the first mandrel up or down in the vertical direction, so as to adjust the tightness of the conveyor belt 14 to maintain the conveyor belt 14 at a proper tension.

Further, the tensioning mechanism 6 further includes idler rollers 62. Two idler rollers 62 are respectively arranged on opposite sides of the tensioning roller 61, and the idler rollers 62 are located above the tensioning roller 61. The idler roller 62 includes a second mandrel and a second rotating cylinder rotatably connected to the second mandrel. Both ends of the second mandrel are respectively connected to two fourth mounts. The outer surface of the conveyor belt 14 is in rolling contact with the second rotating cylinder. The idler rollers 62 are arranged on opposite sides of the tensioning roller 61, which may prevent the conveyor belt 14 on the opposite sides of the tensioning roller 61 from being loosened, thereby ensuring that the conveyor belt 14 has sufficient tension.

Further, the first encoder 41 is used to measure the first real-time angle of rotation of the driven roller 13, and the second encoder 42 is used to measure the second real-time angle of rotation of the driving roller 12. In the case that the diameter of the driving roller 12 is equal to the diameter of the driven roller 13, when the to-be-detected object 7 is moved from the loading position to the detection position, the first real-time angle should be equal to the second real-time angle.

If the first real-time angle is smaller than the second real-time angle, it indicates that the conveyor belt 14 is too loose and slipping. In the case that the driving roller 12 rotates by the second target angle, if the travel distance of the conveyor belt 14 is smaller than the distance between the loading position and the detection position, the to-be-detected object 7 is not moved to the detection position. Thus, if detection is conducted on the to-be-detected object 7 at this time, the detection accuracy will be affected.

The tension level of the conveyor belt 14 may be reflected by comparing the first real-time angle measured by the first encoder 41 and the second real-time angle measured by the second encoder 42. When the conveyor belt 14 is too loose, adjusting the tensioning mechanism 6 to enable the conveyor belt 14 to be at a proper tension may ensure the detection accuracy.

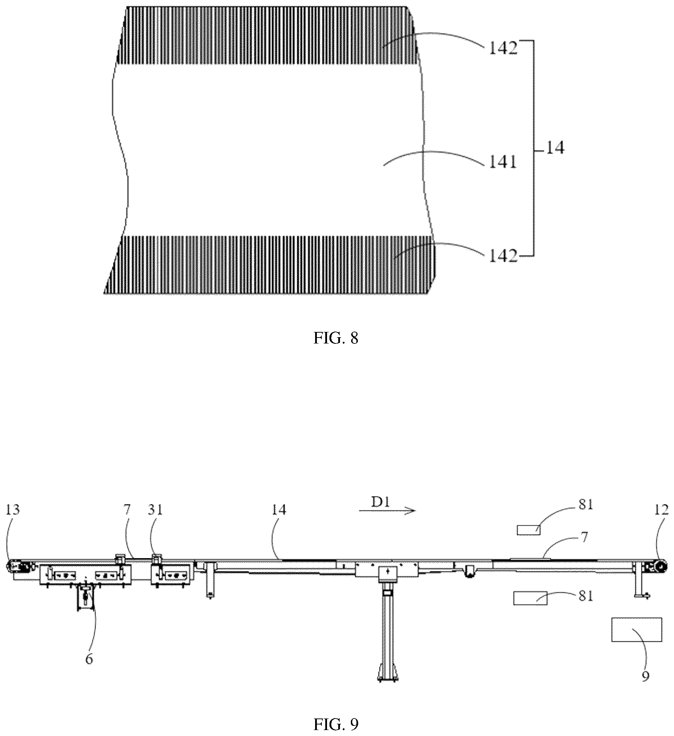

As shown in FIG. 9, the embodiments of the present disclosure further provide a detection system. The detection system includes a conveying device and a detection device. The detection device is arranged in a conveying direction of the conveying device, the conveying device is used to convey a to-be-detected object 7 from a first position to a second position, and the detection device is used to detect the to-be-detected object 7.

The conveying device has a structure as described above, and a loading station and a detection station are located in the conveying direction of the conveying device. The detection device includes a radiation source 81 and a detector 82, which are provided at the detection station. Optionally, the radiation source 81 and the detector 82 are fixedly mounted relative to each other at the detection station. For example, the radiation source 81 is mounted on the first side of the conveyor belt 14 and the detector 82 is mounted on the second side of the conveyor belt 14. Optionally, the radiation source 81 and the detector 82 are rotatably mounted at the detection station.

Radiation beams emitted by the radiation source 81 form a scanning region. The detector 82 is used to detect projection data formed when the radiation beams pass through the to-be-detected object 7 during the passage of the to-be-detected object 7 through the scanning region. An imaging unit is configured to generate a scanned image based on the projection data, so as to detect whether there is a defect in the to-be-detected object 7.

At the loading station, two groups of first sensors are used to detect whether the to-be-detected object 7 is located at the loading position. At the detection station, the first encoder 41 is used to detect whether the to-be-detected object 7 is at the detection position.

The to-be-detected object 7 is placed on the conveyor belt 14 and located at the loading position. The to-be-detected object 7 is located in the sensing region of the two groups of first sensors. The first sensor 31 sends a first sensing signal to the control unit 9. After receiving the first sensing signal, the control unit 9 controls the motor to be turned on, thus the to-be-detected object 7 is moved towards the detection position with the conveyor belt 14.

After the motor is turned on, the first encoder 41 detects the first real-time angle of rotation of the driven roller 13. If the first real-time angle is equal to the first target angle, it indicates that the to-be-detected object 7 is moved to the detection position. The first encoder 41 sends a first angle signal to the control unit 9, and the control unit 9 controls the motor to be turned off. After the motor is turned off, the conveyor belt 14 is in a stationary state, the to-be-detected object 7 is at the detection position, and the detection device starts to detect the to-be-detected object 7.

The radiation beams emitted by the radiation source 81 pass through the to-be-detected object 7, the detector 82 detects the projection data formed when the radiation beams pass through the to-be-detected object 7, and the imaging unit generates a scanned image based on the projection data, so as to achieve the detection of the to-be-detected object 7.

After the detection of the to-be-detected object 7 is completed, the control unit 9 receives a detection completion signal sent by the detection device, and controls the motor to be turned on, so that the to-be-detected object 7 is moved towards the offloading position with the conveyor belt 14. When the to-be-detected object 7 is moved to the offloading position, the control unit 9 controls the motor to be turned off.

The first sensor 31 and the first encoder 41 may accurately detect the loading position and the detection position of the to-be-detected object 7, so that it is possible to ensure that the to-be-detected object 7 is accurately moved to the detection position. Thus, when the to-be-detected 7 is detected at the detection position, the detection accuracy may be ensured.

The conveying device and the detection system provided in the embodiments of the present disclosure may at least achieve the following technical effects: the sensor unit is used to sense the position information of the to-be-detected object on the conveyor belt, and the control unit controls the driving mechanism to be in the first state or the second state based on the sensing signal of the sensor unit, so that the to-be-detected object may be accurately moved from the loading position to the detection position, thereby ensuring the position accuracy of the to-be-detected object at the detection position.

The above are only specific embodiments of the present disclosure, and the protection scope of the present disclosure is not limited to this. Any change or substitution made within the spirit and principle of the present disclosure should be covered by the protection scope of the present disclosure. Therefore, the protection scope of the present disclosure shall be based on the protection scope of the claims.

## Claims

1. A conveying device, comprising:
a conveying mechanism (1) comprising a mounting frame (11), a driving roller (12), a driven roller (13) and a conveyor belt (14), wherein the driving roller (12) and the driven roller (13) are rotatably mounted on the mounting frame (11), and the conveyor belt (14) is fitted over the driving roller (12) and the driven roller (13) and is configured to convey a to-be-detected object (7);
a driving mechanism (2) connected with the driving roller (12) and configured to drive the driving roller (12) to rotate;
a sensor unit configured to sense a first position information and a second position information of the to-be-detected object (7) on the conveyor belt (14); and
a control unit (9) communicatively connected with both the sensor unit and the driving mechanism (2), wherein the control unit (9) is configured to control the driving mechanism (2) to be in a first state or a second state based on the first position information or the second position information,
wherein when the driving mechanism (2) is in the first state, the conveyor belt (14) conveys the to-be-detected object (7); and when the driving mechanism (2) is in the second state, the conveyor belt (14) is in a stationary state.

2. The conveying device according to claim 1, wherein the sensor unit comprises a first sensor (31) and a second sensor (32);
the first sensor (31) is arranged at a first position in a conveying direction of the conveying mechanism (1), the first sensor (31) is configured to send a first sensing signal to the control unit (9), and the control unit (9) controls the driving mechanism (2) to be in the first state based on the first sensing signal; and
the second sensor (32) is arranged at a second position in the conveying direction of the conveying mechanism (1), the second sensor (32) is configured to send a second sensing signal to the control unit (9), and the control unit (9) controls the driving mechanism (2) to be in the second state based on the second sensing signal.

3. The conveying device according to claim 1, further comprising a feedback unit communicatively connected with the control unit (9),
wherein the feedback unit is configured to detect the second position information of the to-be-detected object (7) on the conveyor belt (14); and
the control unit (9) controls the driving mechanism (2) to be in the second state based on the second position information detected by the feedback unit.

4. The conveying device according to claim 3, wherein the feedback unit comprises a first encoder (41) arranged on the driven roller (13), and the first encoder (41) is configured to measure a first real-time angle of rotation of the driven roller (13) and acquire the second position information based on the first real-time angle.

5. The conveying device according to claim 3, wherein the feedback unit further comprises a second encoder (42) arranged on the driving roller (12), and the second encoder (42) is configured to measure a second real-time angle of rotation of the driving roller (12).

6. The conveying device according to claim 1, wherein the control unit (9) is further configured to receive a detection signal, and control the driving mechanism (2) to be in the first state based on the detection signal, so as to convey the to-be-detected object (7) from a detection position to an offloading position.

7. The conveying device according to any one of claims 1 to 6, wherein the driving roller (12) comprises a first rotating shaft, a driving wheel (121) and first timing pulleys (122), wherein the driving wheel (121) is sleeved on the first rotating shaft, two first timing pulleys (122) are sleeved on the first rotating shaft and arranged on opposite sides of the driving wheel (121);
the driven roller (13) comprises a second rotating shaft, a driven wheel (131) and second timing pulleys (132), wherein the driven wheel (131) is sleeved on the second rotating shaft, and two second timing pulleys (132) are sleeved on the second rotating shaft and arranged on opposite sides of the driven wheel (131); and
the conveyor belt (14) comprises a flat belt (141) and timing belts (142) connected to opposite sides of the flat belt (141), wherein the flat belt (141) is fitted over the driving wheel (121) and the driven wheel (131), and the timing belts (142) are fitted over the first timing pulley (122) and the second timing pulley (132).

8. The conveying device according to claim 7, further comprising a support member (5) arranged on a top of the mounting frame (11) and configured to support the flat belt (141).

9. The conveying device according to any one of claims 1 to 6, further comprising a tensioning mechanism (6) arranged at a bottom of the mounting frame (11), wherein the tensioning mechanism (6) comprises a tensioning roller (61) adapted to be moved in a vertical direction to adjust a tension level of the conveyor belt (14).

10. A detection system, comprising:
the conveying device according to any one of claims 1 to 9; and
a detection device arranged in a conveying direction of the conveying device,
wherein the conveying device is configured to convey a to-be-detected object (7) from a first position to a second position, and the detection device is configured to detect the to-be-detected object (7).
